# EUROPÄISCHE PATENTSCHRIFT

(11) **EP 3 231 674 B1**
(45) Veröffentlichungstag und Bekanntmachung des Hinweises auf die Patenterteilung: **21.07.2021**
(21) Anmeldenummer: 17157873.5
(22) Anmeldetag: 24.02.2017
(51) Int. Cl.: B60S 3/06, A46B 13/00

(54) **WASCH-, PFLEGE- UND/ODER TROCKNUNGSWALZE**
WASHING, CARE AND/OR DRYING ROLLER
ROULEAU DE LAVAGE, DE NETTOYAGE ET/OU DE SECHAGE

(30) Priorität: 25.02.2016 DE 102016103363
(43) Veröffentlichungstag der Anmeldung: 18.10.2017
(73) Patentinhaber: ProMicro GmbH & Co. KG, 82166 Gräfelfing (DE)
(72) Erfinder: Kracht, Peter, 82166 Gräfelfing (DE)
(74) Vertreter: Schmitt-Nilson Schraud Waibel Wohlfrom Patentanwälte Partnerschaft mbB

(56) Entgegenhaltungen:
- DE-A1- 10 242 937
- DE-A1-102005 061 612
- US-A1- 2013 104 332
- US-A1- 2014 366 287

## Beschreibung

Die vorliegende Erfindung betrifft eine Wasch-, Pflege und/oder Trocknungswalze, insbesondere für Autowaschanlagen, einen Adapterring zur Verwendung in einer solchen Walze, ein Aufnahmeelement zur Verwendung in einer solchen Walze und ein Wasch-, Pflege- und/oder Trocknungselement zur Verwendung in einer solchen Walze.

Aus der DE 10 2005 061 612 A1 ist eine Arbeitswalze für eine Fahrzeugreinigungsanlage mit einer drehangetriebenen Antriebswelle und zumindest einem Besatzring bekannt. Bei einer solchen Walze gestaltet sich das Auswechseln von verschmutzten oder abgenutzten Arbeitselementen umständlich und zeitaufwändig. Zudem können die Arbeitselemente nicht auf anderen Fahrzeugreinigungsanlagen zum Beispiel auf anderen Fahrzeugsreinigungsanlagen mit anderen Antriebswellen eingesetzt werden.

Aus der DE 102 42 937 A1 ist eine drehbare Wasch-, Pflege- und/oder Trocknungswalze, insbesondere für Autowaschanlagen, bekannt, mit einem Walzenkörper, an dessen Außenumfang Arbeitselemente aus textilem, textilartigem oder folienartigem Material angebracht sind, die eine radiale Lage haben oder durch Fliehkrafteinwirkung in eine radiale Lage bringbar sind und jeweils eine U- oder V-Form haben oder diese Form unter Fliehkrafteinwirkung annehmen.

Die US 2014/366287 A1 beschreibt eine beleuchtete Fahrzeugwaschvorrichtung, die einen Rahmen und einen Antriebsmechanismus, der von dem Rahmen gehalten wird, aufweist.

Aus der US 2013/104332 A1 ist ein Verfahren zum Formen einer Fahrzeugwaschkomponente bekannt, das den Verfahrensschritt von einem zur Verfügung Stellen einer Schmelze zum Bilden von wenigstens einem Medienelement für die Fahrzeugwaschkomponente beinhaltet. Das wenigstens eine Medienelement beinhaltet ein erstes Segment, um die Anbringung an einer Fahrzeugwaschkomponente zu erleichtern und ein zweites Segment zum Kontaktieren eines Fahrzeugs, um eine Reinigungsfunktions auszuführen. Ein Polymer wird in die Schmelze injiziert, um das wenigstens eine Medienelement zu bilden. Das gegossene Medienelement wird der Form entnommen und dann an der Nabe einer Fahzeugwaschkomponente angebracht.

Es ist daher eine Aufgabe der vorliegenden Erfindung, eine Wasch-, Pflege- und/oder Trocknungswalze anzugeben, bei der die Wasch-, Pflege- und/oder Trocknungselemente schnell und mit geringem Aufwand ausgewechselt werden können. Es ist eine weitere Aufgabe der vorliegenden Erfindung, dieselben Wasch-, Pflege- und/oder Trocknungselemente auf einfache Weise auch bei unterschiedlichen Walzenkörpern einsetzen zu können.

Diese Aufgaben werden durch den Gegenstand des unabhängigen Patentanspruchs gelöst. Vorteilhafte Weiterbildungen ergeben sich aus den abhängigen Ansprüchen.

Eine erfindungsgemäße Wasch-, Pflege- und/oder Trocknungswalze, insbesondere für Autowaschanlagen, umfasst einen drehantreibbaren Walzenkörper; und wenigstens zwei in Axialrichtung übereinander angeordnete, mit dem Walzenkörper drehfest verbundene und im Wesentlichen zylinderförmige Aufnahmeelemente, wobei die Aufnahmeelemente an ihren Außenseiten in Axialrichtung verlaufende Aufnahmenuten für Wasch-, Pflege- und/oder Trocknungselemente und zwischen benachbarten Aufnahmenuten liegende Zwischenräume aufweisen; wobei jeweils zwei benachbarten Aufnahmeelemente so in Drehrichtung zueinander versetzt sind, dass die Aufnahmenuten eines Aufnahmeelements in Axialrichtung mit Zwischenräumen des jeweils benachbarten Aufnahmeelements fluchten, um so ein auseinanderbaufreies Auswechseln der Wasch-, Pflege- und/oder Trocknungselemente zu erlauben.

Somit können Wasch-, Pflege- und/oder Trocknungselemente, die in einer Aufnahmenut eines Aufnahmeelements eingesetzt sind, wenn sie verschmutzt oder abgenutzt sind, auf einfache Weise entfernt werden, indem sie in den jeweils darüber oder darunter liegenden, fluchtenden Zwischenraum des benachbarten Aufnahmeelements verschoben und dann nach außen entfernt werden. Ein Einsetzen eines neuen Wasch-, Pflege- und/oder Trocknungselements erfolgt analog, indem dieses von außen in den Zwischenraum, der mit der Aufnahmenut des jeweils benachbarten Aufnahmeelements fluchtet, bewegt und dann nach unten oder oben in die Aufnahmenut eingeschoben wird.

Der drehantreibbare Walzenkörper und die wenigstens zwei drehfest mit diesem verbundenen und im Wesentlichen zylinderförmigen Aufnahmeelemente müssen dafür nicht verändert oder gar auseinandergebaut werden, sondern können in ihrer Einbausituation verbleiben. Dies erleichtert und beschleunigt das Auswechseln von Wasch-, Pflege- und/oder Trocknungselementen gegenüber herkömmlichen Wasch-, Pflege- und/oder Trocknungswalze. Abkürzungshalber wird im Folgenden anstelle von Wasch-, Pflege- und/oder Trocknungswalze nur kurz von "Walze" gesprochen.

Eine erfindungsgemäße Walze ist auch kostengünstig in der Herstellung, denn die Aufnahmeelemente können jeweils identisch sein, sie sind nur so auszubilden und in Drehrichtung zueinander versetzt anzuordnen, dass die Aufnahmenuten eines Aufnahmeelements in Axialrichtung mit Zwischenräumen des jeweils benachbarten Aufnahmeelements fluchten.

Die Zwischenräume sollten dabei mindestens so groß bemessen sein, dass sie jeweils dem Innendurchmesser der Aufnahmenut entsprechen, sodass ein Element in diesen Zwischenraum eingebracht und in die darunter oder darüber liegende, mit diesem Zwischenraum fluchtende Aufnahmenut eingeschoben werden kann.

Des Weiteren ist eine erfindungsgemäße Walze für eine Vielzahl von Wasch-, Pflege- und/oder Trocknungselementen geeignet, solange deren Verankerungsstücke, insbesondere deren wulstartige Ankerbereiche nur in die Aufnahmenuten passen.

Das jeweils unterste Aufnahmeelement ist gegenüber einem unteren Befestigungsstück des Walzenkörpers befestigt, und ebenso ist das jeweils oberste Aufnahmeelement gegenüber einem oberen Befestigungsstück drehfest verbunden. Einander benachbarte Aufnahmeelemente sind ebenfalls vorzugsweise drehfest miteinander verbunden.

Gemäß einer ersten Ausführungsform weisen die Aufnahmenuten, im Querschnitt gesehen, ein C-förmiges Profil auf. Gemäß einer weiteren Ausführungsform erstrecken sich die Aufnahmenuten über wenigstens einen Großteil der Höhe des jeweiligen Aufnahmeelements. Mittels solchermaßen ausgebildeter Aufnahmenuten können die Wasch-, Pflege- und/oder Trocknungselemente besonders zuverlässig gehaltert werden.

Gemäß einer weiteren Ausführungsform sind die Aufnahmenuten an ihrem oberen und an ihrem unteren Ende offen. Dabei können die Aufnahmenuten eine Einrast-Vertiefung aufweisen, zum lösbaren höhenmäßigen Verrasten eines Wasch-, Pflege- und/oder Trocknungselements mittels eines an dem Wasch-, Pflege- und/oder Trocknungselement ausgebildeten, korrespondierenden Einrast-Vorsprungs. Alternativ dazu können die Aufnahmenuten einen Einrast-Vorsprung aufweisen, zum lösbaren höhenmäßigen Verrasten eines Wasch-, Pflege- und/oder Trocknungselements mittels einer an dem Wasch-, Pflege- und/oder Trocknungselement ausgebildeten, korrespondierenden Einrast-Vertiefung.

Auf diese Weise können die Wasch-, Pflege- und/oder Trocknungselemente sowohl von unten, als auch von oben über den fluchtenden Zwischenraum des jeweils benachbarten Aufnahmeelements in die jeweilige Aufnahmenut eingeschoben werden.

Das höhenmäßige Positionieren erfolgt über das Verrasten des Wasch-, Pflege- und/oder Trocknungselement-seitigen Einrast-Vorsprungs gegenüber der Aufnahmenut-seitigen Einrastung bzw. des Aufnahmenut-seitigen Einrast-Vorsprungs gegenüber der Wasch-, Pflege- und/oder Trocknungselement-seitigen Einrast-Vertiefung. Die Einrast-Vertiefungen und Einrast-Vorsprünge sind dabei so korrespondierend zueinander angeordnet, dass bei einem Einrasten eines Einrast-Vorsprungs in eine korrespondierende Einrast-Vertiefung das Wasch-, Pflege- und/oder Trocknungselement den gewünschten Höhenbereich einnimmt.

Die Einrast-Vorsprünge und Einrast-Vertiefungen sind dabei so ausgeführt, dass im Betrieb der Walze eine sichere höhenmäßige Positionierung der Wasch-, Pflege- und/oder Trocknungselemente sichergestellt und ein Herausrutschen derselben aus den Aufnahmenuten zuverlässig verhindert wird. Gleichzeitig ist es jedoch möglich, beim Aufbringen einer ausreichend großen Kraft in Axialrichtung auf die Wasch-, Pflege- und/oder Trocknungselement diese wieder aus der Verrastung zu lösen und die Wasch-, Pflege- und/oder Trocknungselemente, insbesondere wenn sie verschmutzt oder verbraucht sind, aus den Aufnahmenuten zu entfernen und durch neue oder gereinigte Wasch-, Pflege- und/oder Trocknungselemente zu ersetzen.

Gemäß einer alternativen Ausführungsform, bei der jedoch nur ein Entfernen von verbrauchten Trockungselementen nach oben und ein Einsetzen von neuen unverbrauchten Trocknungselementen von oben möglich ist, sind die Aufnahmenuten an ihrem jeweils oberen Ende offen sind, und weisen an ihrem jeweils unteren Ende einen Anschlag auf, zum höhenmäßigen Positionieren und/oder zum Verhindern des Durchrutschens des jeweiligen Wasch-, Pflege- und/oder Trocknungselements.

Gemäß einer weiteren Ausführungsform sind die Aufnahmeelemente mit den Aufnahmenuten einstückig ausgebildet, oder, alternativ dazu sind die Aufnahmeelemente mit den Aufnahmenuten jeweils aus zwei im Wesentlichen halbzylinderförmigen Aufnahmeteilelementen mit Aufnahmenuten zusammengesetzt.

In dem Fall dass die Aufnahmeelemente aus Kunststoff sind, bietet sich als Herstellungsart das Spritzgießen an. Bei einer Ausbildung zum Beispiel aus Metall, insbesondere Aluminium, bietet sich als Herstellungsart das Gießen an.

Gemäß einer weiteren Ausführungsform der Erfindung sind die Aufnahmenuten über den Umfang des Aufnahmeelements äquidistant verteilt. Die Breite der Zwischenräume kann dabei wenigstens der Breite des Innendurchmessers der Aufnahmenuten entsprechen. Somit sind die Aufnahmenuten mit den Zwischenräumen der jeweils benachbarten Aufnahmeelementen sehr gut aufeinander abgestimmt.

Gemäß einer weiteren Ausführungsform umfasst die Walze weiterhin wenigstens ein in eine Aufnahmenut eingesetztes Wasch-, Pflege- und/oder Trocknungselement. Das Wasch-, Pflege- und/oder Trocknungselement kann insbesondere mit einem wulstartigen Ankerbereich desselben in die Aufnahmenut eingesetzt sein, der wulstartige Ankerbereich kann an einem Ende verbreitert ausgebildet sein, zum Bilden eines Anschlags gegenüber dem Ende der Aufnahmenut. Alternativ oder zusätzlich dazu kann das Wasch-, Pflege- und/oder Trocknungselement eine Einrast-Vertiefung oder einen Einrast-Vorsprung aufweisen und mittels dieser/diesem gegenüber einem korrespondierenden Einrast-Vorsprung der Aufnahmenut bzw. gegenüber einer korrespondierenden Einrast-Vertiefung der Aufnahmenut lösbar verrastet sein.

Dadurch kann eine zuverlässige und höhenmäßige definierte Halterung der Trocknungselemente im Betrieb der Walze sichergestellt werden. Gleichzeitig können die Wasch-, Pflege- und/oder Trocknungselemente, wenn sie verschmutzt oder verbraucht sind, durch Lösen der Verrastung, durch Herausschieben aus der Aufnahmenut in axialer Richtung und durch Entnehmen derselben sowie durch Einbringen und Einschieben von neuen bzw. gereinigten Wasch-, Pflege- und/oder Trocknungselementen in die jeweilige Aufnahmenut und durch Verrasten derselben in dieser Aufnahmenut schnell und zuverlässig ausgetauscht werden.

Gemäß einer weiteren Ausführungsform umfasst das Wasch-, Pflege- und/oder Trocknungselement ein im Wesentlichen streifenförmiges Textilstück, das insbesondere an seinem walzenfernen Ende eine Schlitzfahne aufweist. Mit einem solchem streifenförmigen Textilstück erfolgt die eigentliche Bearbeitung des zu waschenden, zu reinigenden oder zu trocknenden Gegenstands, insbesondere Kraftfahrzeugs.

Gemäß einer weiteren Ausführungsform weist das Wasch-, Pflege- und/oder Trocknungselement an seinem walzennahen Ende ein Verankerungsstück, insbesondere aus einem Kunststoffmaterial auf, mit einem wulstartigen Ankerbereich. Der Außendurchmesser des wulstartigen Ankerbereichs kann dem Innendurchmesser der Aufnahmenut entsprechen oder geringfügig kleiner sein als dieser. Das Verankerungsstück kann an dem walzennahen Ende des im Wesentlichen streifenförmigen Textilstücks angenäht, insbesondere in einen Aufnahmeschlitz zwischen zwei Endlappen des Textilstücks eingesetzt und mit den zwei Endlappen vernäht sein.

Derartige Wasch-, Pflege- und/oder Trocknungselemente mit einem derart beschaffenen und gegenüber dem streifenförmigen Textilstück verbundenen Verankerungstück sind besonders zuverlässig und langlebig.

Gemäß einer weiteren Ausführungsform umfasst die Walze weiterhin wenigstens einen, vorzugsweise zwei Adapterringe pro Aufnahmeelement, die das jeweilige Aufnahmeelement drehfest mit dem Walzenkörper verbinden. Insbesondere wenn zwei Adapterringe pro Aufnahmeelement vorgesehen sind und das jeweilige Aufnahmeelement drehfest mit dem Walzenkörper verbinden, ergibt sich eine besonders zuverlässige, kipp- und verrutschsichere Konstruktion.

Durch unterschiedlich beschaffene Adapterringe, insbesondere durch Adapterringe mit unterschiedlichen Innendurchmessern kann dieselbe Art von Aufnahmeelementen auch bei unterschiedlich großen Walzenkörpern zum Einsatz kommen, was Kosten für unterschiedlichen Arten von Aufnahmeelementen vermeidet.

Gemäß einer weiteren Ausführungsform weist der Walzenkörper an seiner Außenseite in Axialrichtung verlaufende Längsschlitze auf. Der wenigstens eine Adapterring kann an seiner Innenseite ausgebildete und nach innen ragende Walzenkörper-Haltevorsprünge aufweisen, die in die Längsschlitze des Walzenkörpers eingreifen. Zusätzlich kann der wenigstens eine Adapterring mit seiner zwischen den Walzenkörper-Haltevorsprüngen gelegenen Innenseite an der Außenseite des Walzenkörpers anliegen.

Dadurch werden die Adapterringe sicher drehfest gegenüber dem jeweiligen Walzenkörper befestigt. Sie müssen nur zu Beginn des Zusammenbaus der Walze einmal auf den Walzenkörper aufgefädelt werden.

Eine zusätzliche Halterung in axial Richtung ist grundsätzlich nicht erforderlich, denn die Adapterringe werden durch die aufeinander aufsitzenden Aufnahmeelemente in Axialrichtung mit fixiert. Hierzu sind entsprechende Auflagebereiche bzw. Anschläge in Axialrichtung zwischen den Aufnahmeelementen und den Adapterringen vorzusehen.

Gemäß einer weiteren Ausführungsform bildet das wenigstens eine Aufnahmeelement an seinem oberen und/oder an seinem unteren Innenseiten-Ende einen im Wesentlichen ringförmigen Adapterring-Haltebereich mit Adapterring-Halteeinbuchtungen aus. Der untere Adapterring-Haltebereich kann dabei eine obere, im Wesentlichen radial gerichtete und/oder im Wesentlichen kreisringförmige Adapterring-Anlagefläche ausbilden, an der insbesondere ein Adapterring mit seiner Oberseite anliegt. Der obere Adapterring-Haltebereich kann eine untere, im Wesentlichen radial gerichtete und/oder im Wesentlichen kreisringförmige Adapterring-Auflagefläche ausbilden, auf der insbesondere ein Adapterring mit seiner Unterseite aufliegt.

Dadurch wird eine sichere, drehfeste Verbindung zwischen Aufnahmeelement und Adapterring geschaffen.

Gemäß einer weiteren Ausführungsform weist der wenigstens eine Adapterring an seiner Außenseite ausgebildete und nach außen ragende Aufnahmeelement-Haltevorsprünge auf, die in die Adapterring-Halteeinbuchtungen des Aufnahmeelements eingreifen. Die Form der Aufnahmeelement-Haltevorsprünge kann dabei mit der Form der Adapterring-Halteeinbuchtungen korrespondieren. Der wenigstens eine Adapterring kann mit seiner zwischen den Aufnahmeelement-Haltevorsprüngen gelegenen Außenseite an der Innenseite des ringförmigen Adapterring-Haltebereichs des Aufnahmeelements anliegen.

Gemäß einer weiteren Ausführungsform weist das wenigstens eine Aufnahmeelement mindestens zweimal so viele Adapterring-Halteeinbuchtungen an seinem oberen und an seinem unteren ringartigen Adapterring-Haltebereich auf, als der wenigstens eine Adapterring Aufnahmeelement-Haltevorsprünge hat, sodass das zwei benachbarte Aufnahmeelemente so mittels ihres wenigstens einen Adapterrings gegenüber dem Walzenkörper positionierbar sind, dass ihre Aufnahmenuten so in Drehrichtung zueinander versetzt sind, dass die Aufnahmenuten eines Aufnahmeelements in Axialrichtung mit Zwischenräumen des jeweils benachbarten Aufnahmeelements fluchten.

Das Aufnahmeelement hat somit eine Anzahl von Adapterringhalteeinbuchtungen, die nicht von Adapterringhaltebereichen belegt sind.

Dabei ist es vorteilhaft, wenn die Adapterringhalteeinbuchtungen sich in einen ersten Halteeinbuchtungssatz und wenigstens einen zweiten zu dem ersten Halteeinbuchtungssatz in Drehrichtung versetzt angeordneten zweiten Halteeinbuchtungssatz unterteilen, wobei bei beiden Halteeinbuchtungssätzen die umfangsmäßige Anordnung der Halteeinbuchtungen der umfangsmäßigen Anordnung der adapterringseitigen Aufnahmeelement-Halte-Vorspüngen entsprechen.

Der zweite Halteeinbuchtungssatz ist dabei so winkelmäßg gegenüber dem ersten Halteeinbuchtungssatz umfangsmäßig versetzt, dass bei einem Aufsetzen eines Aufnahmeelements auf ein weiteres Aufnahmeelement die Aufnahmenuten mit den Zwischenräumen des anderen Aufnahmeelments fluchten.

Gemäß einer weiteren Ausführungsform weist der Walzenkörper mindestens zweimal so viele Längsschlitze auf, als der wenigstens eine Adapterring Walzenkörper-Haltevorsprünge an seiner Innenseite hat, sodass das zwei benachbarte Aufnahmeelemente so mittels ihres wenigstens einen Adapterrings gegenüber dem Walzenkörper positionierbar sind, dass ihre Aufnahmenuten so in Drehrichtung zueinander versetzt sind, dass die Aufnahmenuten eines Aufnahmeelements in Axialrichtung mit Zwischenräumen des jeweils benachbarten Aufnahmeelements fluchten.

Der Walzenkörper hat somit eine Anzahl von Längsschlitzen, die nicht von Walzenkörper-Haltevorsprüngen des Adapterrings belegt sind.

Dabei ist es vorteilhaft, wenn die Längsschlitze sich in einen ersten Längsschlitzsatz und wenigstens einen zweiten zu dem ersten Längsschlitzsatz in Drehrichtung versetzt angeordneten zweiten Längsschlitzsatz unterteilen, wobei bei beiden Längsschlitzsätzen die umfangsmäßige Anordnung der Längsschlitze der umfangsmäßigen Anordnung der adapterringseitigen Walzenkörper-Haltevorsprünge entsprechen.

Der zweite Längsschlitzsatz ist dabei so winkelmäßg gegenüber dem ersten Längsschlitzsatz umfangsmäßig versetzt, dass bei einem Aufsetzen eines Aufnahmeelements auf ein weiteres Aufnahmeelement die Aufnahmenuten mit den Zwischenräumen des anderen Aufnahmeelments fluchten.

Durch diese beiden Ausführungsformen können jeweils zwei benachbarte Aufnahmeelemente auf einfache Weise in Drehrichtung zueinander versetzt werden.

Sie können alleine oder in Kombination verwirklicht werden und stellen jeweils eine konstruktiv einfache Ausgestaltung der Versetzung der Aufnahmenuten von jeweils zwei benachbarten Aufnahmeelementen in Drehrichtung zueinander dar.

Ein Adapterring zur Verwendung in einer Wasch-, Pflege- und/oder Trocknungswalze der oben beschriebenen Art, der nicht in Alleinstellung durch die beigefügten Ansprüche geschützt ist, weist einen Adapterring-Körper; an seiner Innenseite ausgebildete und nach innen ragende Walzenkörper-Haltevorsprünge, zum Eingreifen in korrespondierende Längsschlitze eines Walzenkörpers; und an seiner Außenseite ausgebildete und nach außen ragende Aufnahmeelement-Haltevorsprünge, zum Eingreifen in korrespondierende Adapterring-Halteeinbuchtungen auf.

Alle vorstehend mit Bezug auf den Adapterring als Bestandteil der Walze angegebenen Ausführungsformen und Vorteile treffen auch für den Adapterring in Alleinstellung zur Verwendung in einer solchen Weise zu und werden hier nicht noch einmal wiederholt.

Das Recht, zu einem späteren Zeitpunkt abhängige Adapterring-Ansprüche auf solche Ausführungsformen zu richten, behält sich die Anmelderin ausdrücklich vor.

Neben den oben aufgezeigten Vorteilen, kann mit einem erfindungsgemäßen Adapterring quasi die Schnittstelle zwischen Aufnahmeelementen gleicher Art und unterschiedlichen Walzenkörpern hergestellt werden. Mit anderen Worten kann mit einem erfindungsgemäßen Adapterring, dessen Innenseite an einen jeweiligen Walzenkörper angepasst ist, sichergestellt werden, dass ein- und dieselbe Art von Aufnahmeelementen bei unterschiedlichen Walzenkörpern eingesetzt werden können.

Gemäß einer weiteren Ausführungsform des Adapterrings umfasst dieser weiterhin eine zwischen den Walzenkörper-Haltevorsprüngen gelegenen Innenseite, zum Anliegen an einer Außenseite des Walzenkörpers. Der Adapterring kann eine zwischen den Aufnahmeelement-Haltevorsprüngen gelegenen Außenseite haben, zum Anliegen an der Innenseite des ringförmigen Adapterring-Haltebereichs des Aufnahmeelements. Der Adapterring kann eine Oberseite zum Anliegen an einer oberen Adapterring-Anlagefläche eines Aufnahmeelements haben. Der Adapterring kann eine Unterseite zum Aufliegen auf einer unteren Adapterring-Auflagefläche eines Aufnahmeelements haben.

Ein Aufnahmeelement zur Verwendung in einer Wasch-, Pflege- und/oder Trocknungswalze der oben beschriebenen Art, das nicht in Alleinstellung durch die beigefügten Ansprüche geschützt ist, weist einen im Wesentlichen zylinderförmigen Grundkörper, zur drehfesten Verbindung mit einem drehantreibbaren Walzenkörper, insbesondere mittels wenigstens einem Adapterring der oben beschriebenen Art, wobei an der Außenseite in Axialrichtung verlaufende Aufnahmenuten für Wasch-, Pflege- und/oder Trocknungselemente und zwischen benachbarten Aufnahmenuten liegende Zwischenräume vorgesehen sind, auf.

Die vorstehend mit Bezug auf das Aufnahmeelement als Bestandteil der Walze angegebenen Ausführungsformen und Vorteile treffen in gleicher Weise auch auf das Aufnahmeelement in Alleinstellung zur Verwendung in einer solchen Walze zu. Diese werden nicht noch einmal wiederholt.

Die Anmelderin behält sich jedoch das ausdrückliche Recht vor, zu einem späteren Zeitpunkt abhängige Aufnahmeelement-Ansprüche auf solche Ausführungsformen zu richten.

Ein solches erfindungsgemäßes Aufnahmeelement haltert die Trocknungselemente zuverlässig im Betrieb, stellt jedoch gleichzeitig eine individuelle Austauschbarkeit derselben im zusammengebauten Zustand der Walze bereit, ohne dass unterschiedliche Arten von Aufnahmeelementen vorgesehen werden müssten.

Gemäß einer Ausführungsform der Erfindung ist bei einem Aufnahmeelement an dem oberen und/oder an dem unteren Innenseiten-Ende ein im Wesentlichen ringförmiger Adapterring-Haltebereich mit Adapterring-Halteeinbuchtungen vorgesehen. Der untere Adapterring-Haltebereich kann eine obere, im Wesentlichen radial gerichtete und/oder im Wesentlichen kreisringförmige Adapterring-Anlagefläche ausbilden, zum Anliegen an der Oberseite eines Adapterrings, insbesondere eines Adapterrings der oben beschriebenen Art. Der obere Adapterring-Haltebereich kann eine untere, im Wesentlichen radial gerichtete und/oder im Wesentlichen kreisringförmige Adapterring-Auflagefläche ausbilden, zum Abstützen der Unterseite eines Adapterrings, insbesondere eines Adapterrings der oben beschriebenen Art.

Ein Wasch-, Pflege- und/oder Trocknungselement zur Verwendung in einer Wasch-, Pflege- und/oder Trocknungswalze der oben beschriebenen Art, das nicht in Alleinstellung durch die beigefügten Ansprüche geschützt ist, weist ein im Wesentlichen streifenförmiges Textilstück, das insbesondere an seinem walzenfernen Ende eine Schlitzfahne hat; ein Verankerungsstück, insbesondere aus einem Kunststoffmaterial, mit einem wulstartigen Ankerbereich an seinem walzennahen Ende; wobei der wulstartige Ankerbereich an einem Ende verbreitert ausgebildet ist, zum Bilden eines Anschlags gegenüber dem Ende der Aufnahmenut; und/oder wobei eine Einrast-Vertiefung oder ein Einrast-Vorsprung an dem Verankerungsstück vorgesehen ist, zum lösbaren Verrasten gegenüber einem korrespondierenden Einrast-Vorsprung der Aufnahmenut bzw. gegenüber einer korrespondierenden Einrast-Vertiefung der Aufnahmenut, auf.

Die vorstehend mit Bezug auf das Wasch-, Pflege- und/oder Trocknungselement als Bestandteil der Walze angegebenen Ausführungsformen und Vorteile treffen in gleicher Weise auf das Wasch-, Pflege- und/oder Trocknungselement in Alleinstellung zur Verwendung in einer solchen Walze zu. Diese werden daher zur Vermeidung von Wiederholungen nicht noch einmal erläutert.

Das Recht, zu einem späteren Zeitpunkt abhängige Wasch-, Pflege- und/oder Trocknungselement-Ansprüche auf solche Ausführungsformen zu richten, behält sich die Anmelderin an dieser Stelle ausdrücklich vor.

Die Wasch-, Pflege- und/oder Trocknungselemente können häufig wieder verwendet werden. Nach dem Entfernen werden sie gewaschen, und können danach wieder eingesetzt werden.

Die Aufnahmeelemente können umgangssprachlich auch als Korb bzw. Körbe bezeichnet werden. Der Walzenkörper kann ebenfalls als Wellenrohr bezeichnet werden.

Die Erfindung ist nachfolgend anhand von Ausführungsbeispielen mit Bezug auf die beiliegenden Figuren näher erläutert.
Figur 1 zeigt eine Seitenansicht, teilweise im Schnitt, einer Wasch-, Pflege- und/oder Trocknungswalze, gemäß einem Ausführungsbeispiel der vorliegenden Erfindung;
Figur 2 zeigt eine perspektivische Ansicht schräg von oben auf einen drehantreibbaren Walzenkörper der Walze aus Figur 1, gemäß einem Ausführungsbeispiel der vorliegenden Erfindung;
Figur 3 zeigt eine perspektivische Draufsicht auf einen Adapterring der Walze aus Figur 1, gemäß einem Ausführungsbeispiel der vorliegenden Erfindung;
Figur 4 zeigt eine perspektivische Ansicht schräg von oben auf ein zylinderförmiges Aufnahmeelement der Walze 2 aus Figur 1, mit einem in einer C-förmigen Aufnahmenut davon eingesetzten Verankerungsstück, gemäß einem Ausführungsbeispiel der vorliegenden Erfindung;
Figur 5 zeigt anhand ihrer Teilfigur Figur 5(a) eine Seitenansicht auf das Verankerungsstück aus Figur 4, gemäß einem Ausführungsbeispiel der vorliegenden Erfindung; anhand ihrer Teilfigur 5(b) eine Draufsicht auf ein solches Verankerungsstück und anhand ihrer Teilfigur 5(c) eine Draufsicht auf das zylinderförmige Aufnahmeelement aus Figur 4, ohne Verankerungsstück; und
Figur 6 zeigt eine perspektivische Ansicht schräg von oben auf zwei in Axialrichtung übereinander und in Drehrichtung zueinander versetzt angeordnete zylinderförmige Aufnahmeelemente, mit einer Anzahl von in einige C-förmige Aufnahmenuten eingesetzter Verankerungsstücke, beim Vorgang des Einschiebens eines Verankerungsstücks von einem oberen Zwischenraum in eine untere, damit fluchtende C-förmige Aufnahmenut gemäß einem Ausführungsbeispiel der vorliegenden Erfindung.

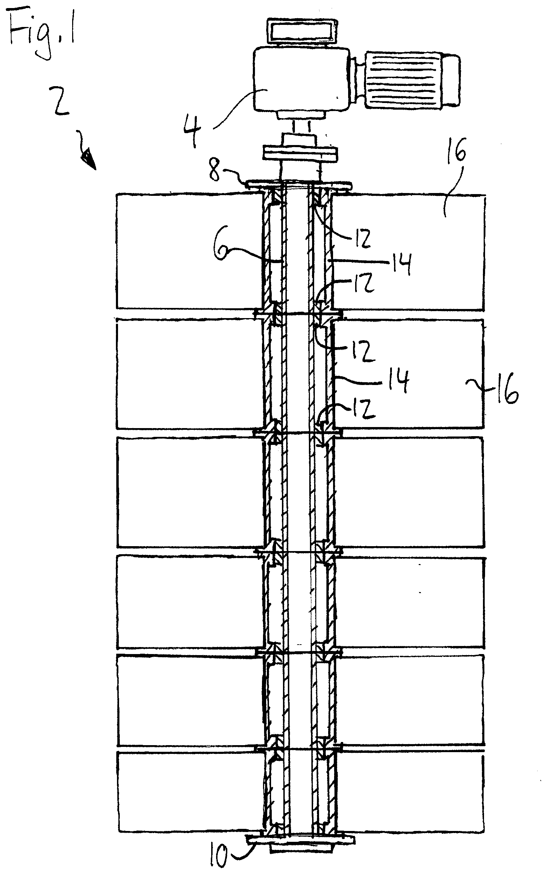

Figur 1 zeigt eine Seitenansicht, teilweise im Schnitt, einer Wasch-, Pflege- und/oder Trocknungswalze 2, gemäß einem Ausführungsbeispiel der vorliegenden Erfindung. Die Wasch-, Pflege- und/oder Trocknungswalze 2 wird abkürzungshalber im Folgenden nur kurz als Walze 2 bezeichnet.

Die Walze 2 verfügt über einen im vorliegenden Ausführungsbeispiel vertikal verlaufenden, drehantreibbaren Walzenkörper 6, der an seinem unteren Ende drehbar gelagert ist und an seinem oberen Ende einen Antrieb 4 aufweist, mittels dessen der Walzenkörper 6 in der gewünschten Drehrichtung und mit der gewünschten Drehzahl angetrieben werden kann.

Des weiteren verfügt die Walze 2 über im vorliegenden Ausführungsbeispiel übereinander angeordnete, im Wesentlichen zylinderförmige Aufnahmeelemente 14, die jeweils mittels zwei Adapterringen 12 gegenüber dem Walzenkörper 6 drehfest verbunden sind. Der Aufbau der Adapterringe 12 wird nachfolgend im Einzelnen erläutert.

Auch wenn die zylinderförmigen Aufnahme-Elemente 14 teilweise mit unterschiedlicher Höhe dargestellt sind, so möge man sich die zylinderförmigen Aufnahmeelemente 14 als jeweils baugleiche Elemente gleicher Höhe vorstellen.

Das unterste zylinderförmige Aufnahme-Element 14 steht mit seinem unteren Ende auf einer unteren Befestigungsplatte 10 bzw. einem unteren Befestigungsteller 10 auf, und ist gegenüber diesem befestigt, insbesondere verschraubt.

Ebenso liegt auf dem obersten zylinderförmigen Aufnahmeelement 14 eine obere Befestigungsplatte 8 bzw. ein oberer Befestigungsteller auf und ist gegenüber diesem befestigt, insbesondere verschraubt.

Einander in Vertikalrichtung benachbart angeordnete, zylinderförmige Aufnahmeelemente 14 sind jeweils miteinander drehfest verbunden, insbesondere mittels einer Verzahnung, und jeweils zueinander in Drehrichtung versetzt, wie dies nachfolgend erläutert werden wird.

Des Weiteren sind an den zylinderförmigen Aufnahmeelementen 14 Wasch-, Pflege- und/oder Trocknungselemente 16 arretiert, und zwar so, dass sie in Axialrichtung lösbar, jedoch in einer jeweils bezüglich des zylinderförmigen Aufnahmeelements 14 definierten Höhenposition verrastet sind und sich radial nach außen erstrecken. Ihre radialen Außenbereiche bilden die Behandlungsbereiche für den zu waschenden, zu pflegenden oder zu trockenen Gegenstand, insbesondere das Kraftfahrzeug. Diese radialen Außenbereiche sind in der Fig. 1 idealisiert dargestellt und hängen üblicherweise etwas nach unten. Sie können geschlitzt, insbesondere nach Art an der Schlitzfahne ausgebildet sein (nicht gezeigt).

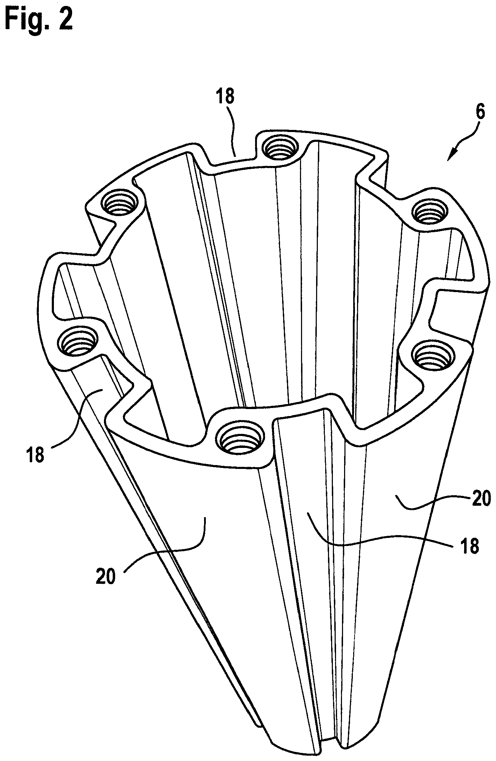

Figur 2 zeigt eine perspektivische Ansicht schräg von oben auf den drehantreibbaren Walzenkörper 6 der Walze 2.

Der drehantreibbare Walzenkörper 6 ist mittels in seinen Stirnseiten ausgebildeten Gewindebohrungen gegenüber korrespondierenden oberen und unteren Befestigungsplatten 8 und 10 befestigbar, insbesondere verschraubbar.

Der in dem vorliegenden Ausführungsbeispiel gezeigte Walzenkörper 6 verfügt über sechs äquidistant angeordnete Walzenkörper-Längsschlitze 18, die sich über die gesamte Höhe des Walzenkörpers 6 erstrecken, sowie über jeweils zwischen benachbarten Walzenkörper-Längsschlitzen 18 angeordnete Walzenkörper-Außenseitenbereiche 20 jeweils gleicher umfangsmäßiger Breite. Alle sechs Walzenkörper-Längsschlitze 18 haben jeweils die gleiche Tiefe und Breite.

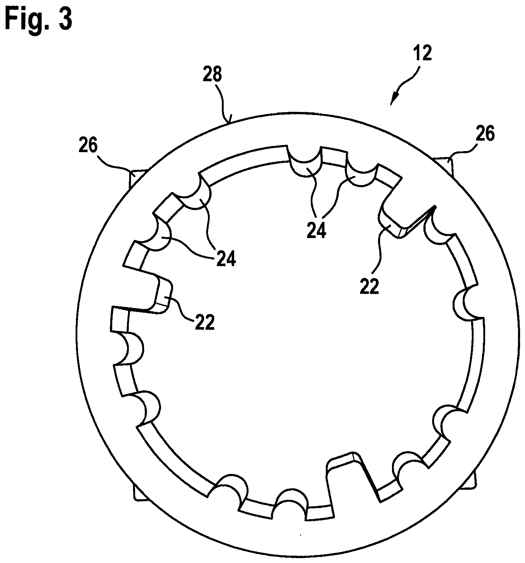

Figur 3 zeigt eine perspektivische Draufsicht auf einen Adapterring 12 der Walze 2.

Der Adapterring 12 hat an seiner Innenseite drei äquidistant angeordnete, in Radialrichtung nach innen ragende Walzenkörper-Haltevorsprünge 22, deren umfangsmäßige Anordnung, deren Erstreckungstiefe in Radialrichtung und deren Breite auf die Tiefe und Breite der Walzenkörper-Längsschlitze 18 des Walzenkörpers 6 abgestimmt sind.

Des Weiteren verfügt der Adapterring 12 noch über in jeweils zwei Paaren zwischen benachbarten inneren Haltevorsprüngen 22 angeordnete, sich in Radialrichtung nach innen erstreckende und abgerundete innere Anliegevorsprünge 24, die dazu bestimmt sind, im auf den Walzenkörper 6 aufgeschobenen Zustand des Adapterrings 12 von außen an den Walzenkörper-Außenseitenbereichen 20 anzuliegen.

Der Innendurchmesser des durch die Innenseiten der inneren Anliegevorsprünge 24 gebildeten Kreisringzylinders entspricht im Wesentlichen dem durch die Walzenkörper-Außenseitenbereiche 20 gebildeten Außenzylinder.

Beim Nebeneinanderlegen der Figuren 2 und 3 kann man sich gut vorstellen, wie der Adapterring 12 bzw. jeweils zwei Adapterringe 12 pro zylinderförmigem Aufnahmeelement 14 von oben auf den Walzenkörper 6 aufgeschoben wird/werden, sodass die inneren Haltevorsprünge 22 in die jeweils korrespondierenden Walzenkörper-Längsschlitze 18 eingreifen, unter Freilassung jeweils eines Walzenkörper-Längsschlitzes 18 zwischen zwei benachbarten inneren Haltevorsprüngen 22, und dass die inneren Anliegevorsprünge 24 an den Walzenkörper-Außenseitenbereichen 20 anliegen.

Des Weiteren verfügt der Adapterring 12 an seinem äußeren Umfang über vier äquidistant zueinander angeordnete äußere Haltevorsprünge 26, mit jeweils dazwischen liegenden äußeren Anlageflächen 28. Die äußeren Haltevorsprünge 26 haben dabei, im Querschnitt gesehen, eine zahnartige bzw. dreieckige Grundform.

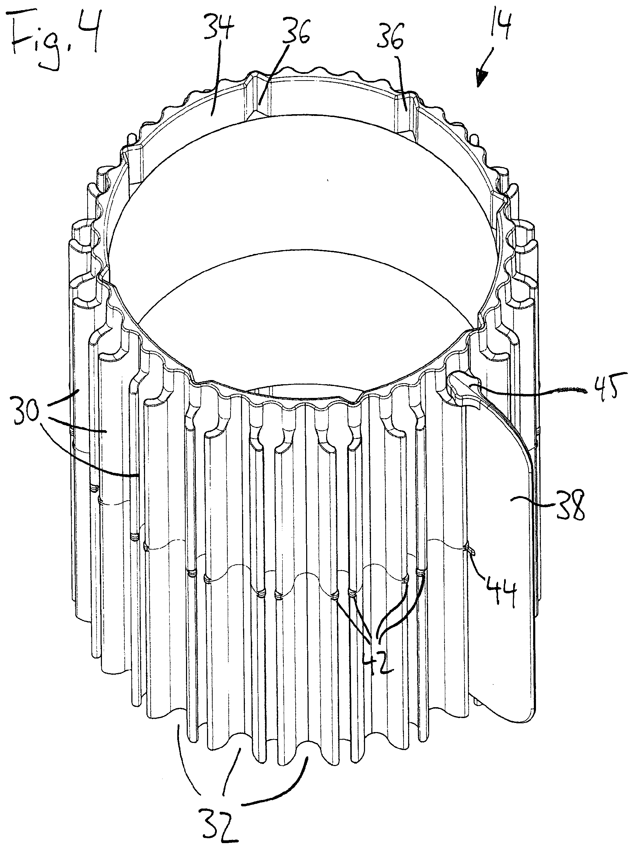

Figur 4 zeigt eine perspektivische Ansicht schräg von oben auf ein zylinderförmiges Aufnahmeelement 14 der Walze 2, mit einem in einer C-förmigen Aufnahmenut 30 davon eingesetzten Verankerungsstück 38.

Das zylinderförmige Aufnahme-Element 14 ist an seinem äußeren Umfang mit einer Vielzahl von Aufnahmenuten 30 für Wasch-, Pflege- und/oder Trocknungselemente 16 sowie mit jeweils dazwischen angeordneten Zwischenräumen 32 versehen. Die Aufnahmenuten 30 sind äquidistant angeordnet und weisen, im Querschnitt gesehen, ein C-förmiges Profil auf. Sie erstrecken sich beinahe über die gesamte Höhe des zylinderförmigen Aufnahmeelements 14 und können an dem oberen Ende und an einem unteren Ende (hier nicht gezeigt) mit einem Einfädelungsabschnitt versehen sein, in dem die Höhe der Wände der C-förmigen Aufnahmenuten zum jeweiligen Ende des Aufnahmeelements 14 abnimmt.

Die Zwischenräume 32 sind in Drehrichtung so bemessen, dass sie mindestens dem Innendurchmesser einer C-förmigen Aufnahmenut 30 entsprechen, sodass ein Verankerungsstück 38 mit dem wulstartigen Ankerbereich 40, dessen Außendurchmesser mit dem Innendurchmesser der C-förmigen Aufnahmenut 30 korrespondiert oder geringfügig kleiner als dieser ausgebildet ist, von oben oder unten in die Aufnahmenut 30 eingeschoben werden kann.

Des Weiteren sind die Aufnahmenuten 30 mit Einrastvertiefungen 42 an den linken und rechten Wänden der Aufnahmenuten 30 versehen. Diese Einrastvertiefungen 42 liegen bei allen Aufnahmenuten 30 jeweils an der gleichen, jeweils mittleren Höhenposition.

In Figur 4 ist auch ein Verankerungsstück 38 eines Wasch-, Pflege- und/oder Trocknungselements zu sehen, dass in eine C-förmige Aufnahmenut 30 eingeschoben ist, und zwar soweit, dass jeweils an einer mittleren Höhenposition radial außerhalb des wulstartigen Ankerbereichs 40 gelegene Einrastvorsprünge 44 in die Einrastvertiefungen 42 der C-förmigen Aufnahmenut 30 einrasten und so die höhenmäßige Position des Verankerungsstück 38 und des daran befestigten, im Wesentlichen streifenförmigen Textilstücks, das man sich in Figur 4 in radialer Richtung nach außen an den Verankerungsstück 38 ansetzend vorstellen möge, festlegt.

Alternativ oder zusätzlich dazu eine höhenmäßige Festlegung des Verankerungsstücks 38 und des daran ansetzenden streifenförmigen Textilstücks dadurch erreicht werden, dass das obere Ende des wulstartigen Ankerbereichs 40 verbreitert ausgebildet ist, sodass es oben auf den Wandenden des Einfädelungsabschnitts der betreffenden C-förmigen Aufnahmenut 30 aufliegt.

An seinem oberen und an seinem unteren Innenseiten-Ende hat das zylinderförmige Aufnahmeelement 14 jeweils einen ringförmigen Adapterring-Haltebereich 34 mit einer Anzahl von Adapterring-Halteeinbuchtungen 36, deren Form der Außenform der äußeren Haltevorsprünge 26 des Adapterrings 12/der Adapterringe 12 entspricht, also zahnartig bzw. dreiecksförmig ausgebildet ist.

Des Weiteren ist an den von dem jeweiligen Ende des zylinderförmigen Aufnahmeelements 14 weggerichteten Seite der Adapterring-Halteeinbuchtungen 36 eine Auflagefläche ausgebildet, die insbesondere in einer radialen Ebene liegt, und auf der die äußeren Haltevorsprünge 26 des Adapterrings 12 aufliegen, wenn der jeweilige Adapterring 12 in den ringförmigen Adapterring-Haltebereich 34 eingebracht ist, und so den jeweiligen Adapterring 12 in Axialrichtung festlegt.

Im vorliegenden Ausführungsbeispiel sind insgesamt acht Adapterring Halteeinbuchtungen 36 vorgesehen, wobei sich diese in einen ersten Satz von vier Adapterring-Halteeinbuchtungen 36 und einen zweiten Satz von vier Adapterring Halteeinbuchtungen 36 untergliedern, in denen die umfangsmäßige Anordnung der Adapterring Halteeinbuchtungen 36 jeweils der umfangsmäßigen Anordnung der äußeren Haltevorsprünge 26 des Adapterrings 12 entsprechen. Der zweite Satz von Adapterring-Halteeinbuchtungen 36 ist dabei so gegenüber dem ersten Satz von Adapterring-Halteeinbuchtungen 36 versetzt, dass die Aufnahmenuten 30 eines Aufnahmeelements 14 in Axialrichtung mit Zwischenräumen des jeweils benachbarten Aufnahmeelements 14 fluchten, wenn diese aufeinander aufgesetzt sind, um so ein Auseinanderbau-freies Auswechseln der Wasch-, Pflege- und/oder Trocknungselemente 16 zu erlauben.

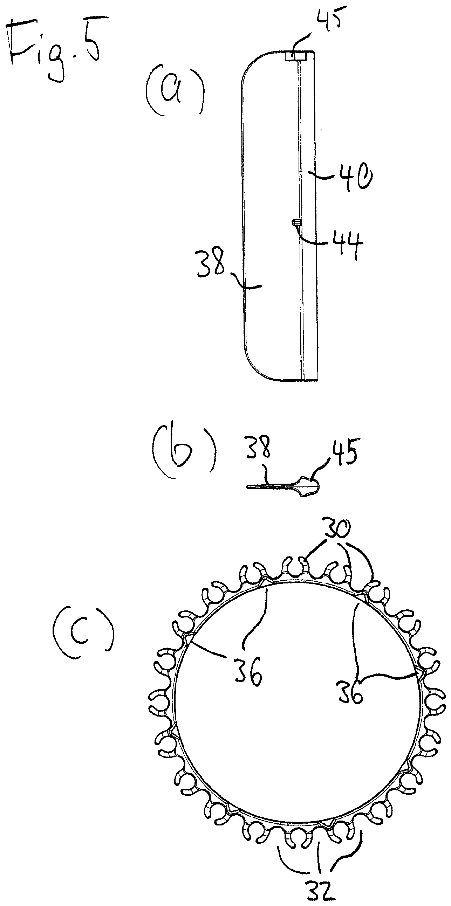

Figur 5 zeigt anhand ihrer Teilfigur Figur 5(a) eine Seitenansicht auf das Verankerungsstück 38 aus Figur 4, gemäß einem Ausführungsbeispiel der vorliegenden Erfindung; anhand ihrer Teilfigur 5(b) eine Draufsicht auf ein solches Verankerungsstück 38 und anhand ihrer Teilfigur 5(c) eine Draufsicht auf das zylinderförmige Aufnahmeelement 14 aus Figur 4, ohne Verankerungsstück 38.

In Figur 5(a) ist das im Wesentlichen streifenförmige Verankerungsstück 38 mit abgerundeten, der Walze ferngelegenen Enden und mit dem Walzen-nah gelegenen wulstartigen Ankerbereich 40 gut zu erkennen.

Die Form des wulstartigen Ankerbereichs 40 im Profil entspricht dabei der Innenform der C-förmigen Aufnahmenut 30 und ist ggf. geringfügig kleiner ausgebildet als diese, um ein einfaches Einführen des Verankerungsstücks 38 mit dem wulstartigen Ankerbereich 40 und eine gute Halterung desselben darin zu ermöglichen.

Des Weiteren ist in Figur 5 (a) der ungefähr auf mittiger Höhe angeordnete Einrastvorsprung 44, der sich von dem wulstartigen Ankerbereich 40 radial ein Stück weg erstreckt, gut zu sehen. Mttels dieses Einrastvorsprungs 44 kann eine höhenmäßige Festlegung des Verankerungsstücks 38 und damit des gesamten Wasch-, Pflege- und/oder Trocknungselements 16 gegenüber einer Einrastvertiefung 42 an der Aufnahmenut 30 erreicht werden.

Ferner ist in Figur 5 (a) sowie in Figur 5 (b) der verbreitete Endabschnitt 45 des wulstartigen Ankerbereichs 40 gut zu erkennen, der in Form von zwei seitlichen Auflagevorsprüngen an dem Übergang zwischen dem wulstartigen Ankerbereich 40 und dem schmalen Restbereich des Verankerungsstücks 38 ausgebildet ist. Dadurch kann ein Aufliegen auf den Wandenden einer jeweiligen C-förmigen Aufnahmenut 30 und so eine höhenmäßige Festlegung des Verankerungsstücks 38 und damit des gesamten Wasch-, Pflege- und/oder Trocknungselements 16 gegenüber dem zylinderförmigen Aufnahmeelement 14 erreicht werden.

In der Teilfigur 5(c) sind die insgesamt 20 äquidistant an der Außenseite des zylinderförmigen Aufnahmeelements 14 angeordneten Aufnahmenuten 30 mit den jeweils zwischen zwei benachbarten Aufnahmenuten 30 angeordneten Zwischenräumen 32 gut zu erkennen. Des Weiteren sind die insgesamt acht an dem oberen Innenseiten-Ende des zylinderförmigen Aufnahmeelements 14 angeordneten Adapterring-Halteeinbuchtungen 36 und deren Grundform gut zu erkennen.

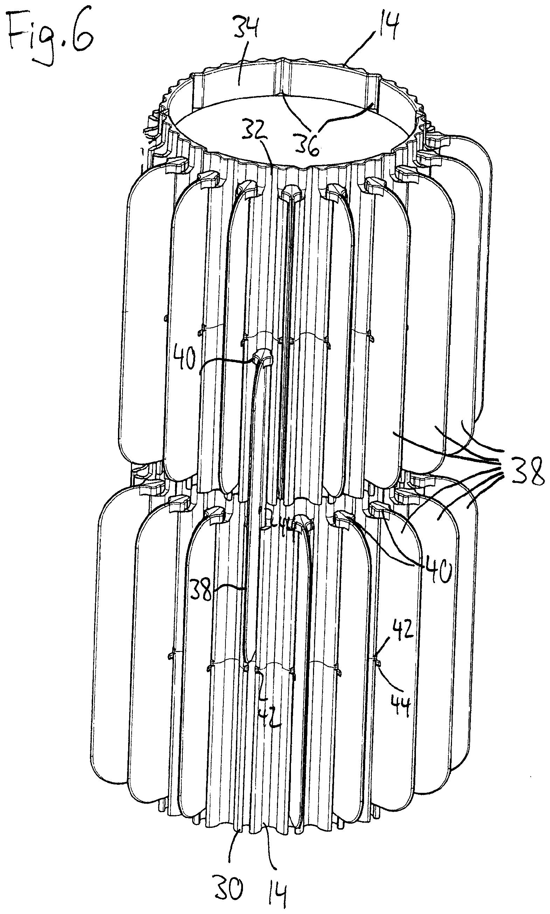

Figur 6 zeigt eine perspektivische Ansicht schräg von oben auf zwei in Axialrichtung übereinander und in Drehrichtung zueinander versetzt angeordnete zylinderförmige Aufnahmeelemente 14, mit einer Anzahl von in einige C-förmige Aufnahmenuten 30 eingesetzter Verankerungsstücke 38, beim Vorgang des Einschiebens eines Verankerungsstücks 38 von einem oberen Zwischenraum 32 in eine untere, damit fluchtende C-förmige Aufnahmenut 30, gemäß einem Ausführungsbeispiel der vorliegenden Erfindung.

Wiederum möge man sich radial nach außen ansetzend an die Verankerungsstücke 38 daran befestigte, insbesondere vernähte streifenförmige Textilstücke vorstellen.

Gemäß Figur 6 ist das obere zylinderförmige Aufnahmeelement 14 so auf das untere zylinderförmige Aufnahmeelement 14 aufgesetzt und versetzt angeordnet, dass die Zwischenräume 32 des oberen zylinderförmigen Aufnahmeelements 14 mit den C-förmigen Aufnahmenuten 30 des unteren zylinderförmigen Aufnahmeelements 14 in Axialrichtung fluchten, und dass dass die Zwischenräume 32 des unteren zylinderförmigen Aufnahmeelements 14 mit den C-förmigen Aufnahmenuten 30 des oberen zylinderförmigen Aufnahmeelements 14 in Axialrichtung fluchten.

Eine Vielzahl von Verankerungsstücken 38 sind mit ihren wulstartigen Ankerbereichen 40 von oben über die jeweils darüber liegenden fluchtenden Zwischenräume 32 in die C-förmigen Aufnahmenuten 30 eingesetzt worden, und durch Aufliegen der verbreiterten Endabschnitte 45 auf den jeweils oberen Wandenden der C-förmigen Aufnahmenuten 30 und/oder durch Einrasten von deren Einrastvorsprüngen 44 gegenüber den Aufnahmenut-seitigen Einrastvertiefungen 42 höhenmäßig fixiert worden.

Bei einem der Verankerungsstücks 38 ist eine Zwischenposition beim Vorgang des Einbringen des Verankerungsstücks 38 von dem oberen Zwischenraum 32 in die darunter liegende und mit dem oberen Zwischenraum 32 fluchtende C-förmige Aufnahmenut 32 gezeigt. Es ist gut zu erkennen, dass der verbreitete wulstartige Ankerbereich 40 in den oberen Zwischenraum 32 passt. Dieses Verankerungsstück 38 wird soweit nach unten geschoben, bis dessen Einrastvorsprung 44 in die Einrastvertiefung 42 einrastet und/oder bis der verbreiterte Endabschnitt 45 des wulstartigen Ankerbereichs 40 auf den oberen Wandenden der unteren C-förmigen Aufnahmenut 30 aufliegt. Ein Entnehmen des Verankerungsstücks 38 nach oben erfolgt analog.

### Bezugszeichenliste

- 2: Wasch-, Pflege- und/oder Trocknungswalze
- 4: Antrieb
- 6: drehantreibbarer Walzenkörper
- 8: obere Befestigungsplatte
- 10: untere Befestigungsplatte
- 12: Adapterringe
- 14: zylinderförmige Aufnahmeelemente
- 16: Wasch-, Pflege- und/oder Trocknungselemente
- 18: Walzenkörper-Längsschlitze
- 20: Walzenkörper-Außenseitenbereiche
- 22: innere Haltevorsprünge
- 24: innere Anliegevorsprünge
- 26: äußere Haltevorsprünge
- 28: äußere Anlagefläche
- 30: C-förmige Aufnahmenuten
- 32: Zwischenräume
- 34: ringförmige Adapterring-Haltebereiche
- 36: Adapterring-Halteeinbuchtungen
- 38: Verankerungsstück
- 40: wulstartiger Ankerbereich
- 42: Einrast-Vertiefung
- 44: Einrast-Vorsprung
- 45: verbreiterter Endabschnitt
- 46: Textilstück

## Patentansprüche

1. Wasch-, Pflege- und/oder Trocknungswalze (2), insbesondere für Autowaschanlagen, aufweisend:
einen drehantreibbaren Walzenkörper (6); und
wenigstens zwei in Axialrichtung übereinander angeordnete, mit dem Walzenkörper (6) drehfest verbundene und im Wesentlichen zylinderförmige Aufnahmeelemente (14),
**dadurch gekennzeichnet, dass** die Aufnahmeelemente (14) an ihren Außenseiten in Axialrichtung verlaufende Aufnahmenuten (30) für Wasch-, Pflege- und/oder Trocknungselemente (16) und zwischen benachbarten Aufnahmenuten (30) liegende Zwischenräume (32) aufweisen;
und dass jeweils zwei benachbarte Aufnahmeelemente (14) so in Drehrichtung zueinander versetzt sind, dass die Aufnahmenuten (30) eines Aufnahmeelements (14) in Axialrichtung mit Zwischenräumen (32) des jeweils benachbarten Aufnahmeelements (14) fluchten, um so ein auseinanderbaufreies Auswechseln der Wasch-, Pflege- und/oder Trocknungselemente (16) zu erlauben.

2. Wasch-, Pflege- und/oder Trocknungswalze (2) nach Anspruch 1,
wobei die Aufnahmenuten (30), im Querschnitt gesehen, ein C-förmiges Profil aufweisen, und/oder
wobei sich die Aufnahmenuten (30) über wenigstens einen Großteil der Höhe des jeweiligen Aufnahmeelements (14) erstrecken.

3. Wasch-, Pflege- und/oder Trocknungswalze (2) nach Anspruch 1 oder 2,
wobei die Aufnahmenuten (30) an ihrem oberen und an ihrem unteren Ende offen sind, und/oder
wobei die Aufnahmenuten (30) eine Einrast-Vertiefung (42) aufweisen, zum lösbaren höhenmäßigen Verrasten eines Wasch-, Pflege- und/oder Trocknungselements (16) mittels eines an dem Wasch-, Pflege- und/oder Trocknungselement (16) ausgebildeten, korrespondierenden Einrast-Vorsprungs (44); und/oder
wobei die Aufnahmenuten (30) einen Einrast-Vorsprung aufweisen, zum lösbaren höhenmäßigen Verrasten eines Wasch-, Pflege- und/oder Trocknungselements (16) mittels einer an dem Wasch-, Pflege- und/oder Trocknungselement (16) ausgebildeten, korrespondierenden Einrast-Vertiefung.

4. Wasch-, Pflege- und/oder Trocknungswalze (2) nach Anspruch 1 oder 2,
wobei die Aufnahmenuten (30) an ihrem jeweils oberen Ende offen sind, und/oder
wobei die Aufnahmenuten (30) an ihrem jeweils unteren Ende einen Anschlag aufweisen, zum höhenmäßigen Positionieren und/oder zum Verhindern des Durchrutschens des jeweiligen Wasch-, Pflege- und/oder Trocknungselements (16).

5. Wasch-, Pflege- und/oder Trocknungswalze (2) nach einem der vorhergehenden Ansprüche,
wobei die Aufnahmeelemente (14) mit den Aufnahmenuten (30) einstückig ausgebildet sind, oder
wobei die Aufnahmeelemente (14) mit den Aufnahmenuten (30) jeweils aus zwei im Wesentlichen halbzylinderförmigen Aufnahmeteilelementen mit Aufnahmenuten (30) zusammengesetzt sind; und/oder
wobei die Aufnahmenuten (30) über den Umfang des Aufnahmeelements (14) äquidistant verteilt sind, und/oder
wobei die Breite der Zwischenräume wenigstens der Breite des Innendurchmessers der Aufnahmenuten (30) entspricht.

6. Wasch-, Pflege- und/oder Trocknungswalze (2) nach einem der vorhergehenden Ansprüche,
weiterhin aufweisend wenigstens ein in eine Aufnahmenut (30) eingesetztes Wasch-, Pflege- und/oder Trocknungselement (16);
wobei das Wasch-, Pflege- und/oder Trocknungselement (16) insbesondere mit einem wulstartigen Ankerbereich (40) desselben in die Aufnahmenut (30) eingesetzt ist, und/oder
wobei der wulstartige Ankerbereich (40) an einem Ende verbreitert (45) ausgebildet ist, zum Bilden eines Anschlags gegenüber dem Ende der Aufnahmenut (30); und/oder
wobei das Wasch-, Pflege- und/oder Trocknungselement (16) eine Einrast-Vertiefung oder einen Einrast-Vorsprung (44) aufweist und mittels dieser/diesem gegenüber einem korrespondierenden Einrast-Vorsprung der Aufnahmenut (30) bzw. gegenüber einer korrespondierenden Einrast-Vertiefung (42) der Aufnahmenut (30) lösbar verrastet ist; und/oder
wobei das Wasch-, Pflege- und/oder Trocknungselement (16) an seinem walzennahen Ende ein Verankerungsstück (38), insbesondere aus einem Kunststoffmaterial aufweist, mit einem wulstartigen Ankerbereich (40), und/oder
wobei der Außendurchmesser des wulstartigen Ankerbereichs (40) dem Innendurchmesser der Aufnahmenut (30) entspricht oder geringfügig kleiner ist als dieser, und/oder
wobei das Verankerungsstück (38) an dem walzennahen Ende des im Wesentlichen streifenförmigen Textilstücks angenäht, insbesondere in einen Aufnahmeschlitz zwischen zwei Endlappen des Textilstücks eingesetzt und mit den zwei Endlappen vernäht ist.

7. Wasch-, Pflege- und/oder Trocknungswalze (2) nach einem der vorhergehenden Ansprüche,
weiterhin aufweisend wenigstens einen, vorzugsweise zwei Adapterringe (12) pro Aufnahmeelement (14), die das jeweilige Aufnahmeelement (14) drehfest mit dem Walzenkörper (6) verbinden.

8. Wasch-, Pflege- und/oder Trocknungswalze (2) nach Anspruch 7,
wobei der Walzenkörper (6) an seiner Außenseite in Axialrichtung verlaufende Längsschlitze (18) aufweist,
wobei der wenigstens eine Adapterring (12) an seiner Innenseite ausgebildete und nach innen ragende Walzenkörper-Haltevorsprünge (22) aufweist, die in die Längsschlitze (18) des Walzenkörpers (6) eingreifen; und/oder
wobei der wenigstens eine Adapterring (12) mit seiner zwischen den Walzenkörper-Haltevorsprüngen (22) gelegenen Innenseite an der Außenseite des Walzenkörpers (6) anliegt.

9. Wasch-, Pflege- und/oder Trocknungswalze (2) nach Anspruch 7 oder 8,
wobei das wenigstens eine Aufnahmeelement (14) an seinem oberen und/oder an seinem unteren Innenseiten-Ende einen im Wesentlichen ringförmigen Adapterring-Haltebereich (34) mit Adapterring-Halteeinbuchtungen (36) ausbildet; und/oder
wobei der untere Adapterring-Haltebereich (34) eine obere, im Wesentlichen radial gerichtete und/oder im Wesentlichen kreisringförmige Adapterring-Anlagefläche ausbildet, an der insbesondere ein Adapterring (12) mit seiner Oberseite anliegt; und/oder
wobei der obere Adapterring-Haltebereich (34) eine untere, im Wesentlichen radial gerichtete und/oder im Wesentlichen kreisringförmige Adapterring-Auflagefläche ausbildet, auf der insbesondere ein Adapterring (12) mit seiner Unterseite aufliegt.

10. Wasch-, Pflege- und/oder Trocknungswalze (2) nach einem der Ansprüche 7 bis 9,
wobei der wenigstens eine Adapterring (12) an seiner Außenseite ausgebildete und nach außen ragende Aufnahmeelement-Haltevorsprünge (26) aufweist, die in die Adapterring-Halteeinbuchtungen (36) des Aufnahmeelements (14) eingreifen; und/oder
wobei die Form der Aufnahmeelement-Haltevorsprünge (26) mit der Form der Adapterring-Halteeinbuchtungen (36) korrespondiert; und/oder
wobei der wenigstens eine Adapterring (12) mit seiner zwischen den Aufnahmeelement-Haltevorsprüngen (26) gelegenen Außenseite an der Innenseite des ringförmigen Adapterring-Haltebereichs (34) des Aufnahmeelements (14) anliegt; und/oder
wobei das wenigstens eine Aufnahmeelement (14) mindestens zweimal so viele Adapterring-Halteeinbuchtungen (36) an seinem oberen und an seinem unteren ringartigen Adapterring-Haltebereich (34) aufweist, als der wenigstens eine Adapterring (12) Aufnahmeelement-Haltevorsprünge (26) hat, sodass zwei benachbarte Aufnahmeelemente (14) so mittels ihres wenigstens einen Adapterrings (12) gegenüber dem Walzenkörper (6) positionierbar sind, dass ihre Aufnahmenuten (30) so in Drehrichtung zueinander versetzt sind, dass die Aufnahmenuten (30) eines Aufnahmeelements (14) in Axialrichtung mit Zwischenräumen (32) des jeweils benachbarten Aufnahmeelements (14) fluchten; und/oder
wobei der Walzenkörper (6) mindestens zweimal so viele Längsschlitze (18) aufweist, als der wenigstens eine Adapterring (12) Walzenkörper-Haltevorsprünge (22) an seiner Innenseite hat, sodass zwei benachbarte Aufnahmeelemente (14) so mittels ihres wenigstens einen Adapterrings (12) gegenüber dem Walzenkörper (6) positionierbar sind, dass ihre Aufnahmenuten (30) so in Drehrichtung zueinander versetzt sind, dass die Aufnahmenuten (30) eines Aufnahmeelements (14) in Axialrichtung mit Zwischenräumen (32) des jeweils benachbarten Aufnahmeelements (14) fluchten.

## Claims

1. A washing, care and/or drying roller (2), in particular for car washes, comprising:
a rotatably drivable roller body (6); and
at least two substantially cylindrical receiving elements (14) which are arranged one above the other in the axial direction and are non-rotatably connected to the roller body (6),
**characterized in that** the receiving elements (14), on the outsides thereof, have axially extending receiving grooves (30) for washing, care and/or drying elements (16) and intermediate spaces (32) located between adjacent receiving grooves (30); and
that two adjacent receiving elements (14) each are offset from one another in the direction of rotation such that the receiving grooves (30) of one receiving element (14) are aligned in the axial direction with intermediate spaces (32) of the respective adjacent receiving element (14) in order to thus permit replacement of the washing, care and/or drying elements (16) without disassembly.

2. A washing, care and/or drying roller (2) according to claim 1,
wherein the receiving grooves (30), as seen in cross section, have a C-shaped profile, and/or
wherein the receiving grooves (30) extend over at least a large part of the height of the respective receiving element (14).

3. A washing, care and/or drying roller (2) according to claim 1 or 2,
wherein the receiving grooves (30) are open at their upper and lower ends, and/or
wherein the receiving grooves (30) have a snap-in recess (42) for releasably latching a washing, care and/or drying element (16) in terms of height by means of a corresponding snap-in projection (44) formed on the washing, care and/or drying element (16); and/or
wherein the receiving grooves (30) have a snap-in projection for releasably latching a washing, care and/or drying element (16) in terms of height by means of a corresponding snap-in recess formed on the washing, care and/ or drying element (16).

4. A washing, care and/or drying roller (2) according to claim 1 or 2,
wherein the receiving grooves (30) are open at their respective upper end, and/or
wherein the receiving grooves (30) have a stop at their respective lower end for positioning the respective washing, care and/or drying element (16) in terms of height and/or for preventing the same from slipping through.

5. A washing, care and/or drying roller (2) according to any of the preceding claims,
wherein the receiving elements (14) are formed integrally with the receiving grooves (30), or
wherein the receiving elements (14) with the receiving grooves (30) are each composed of two substantially semi-cylindrical partial receiving elements with receiving grooves (30); and/or
wherein the receiving grooves (30) are distributed equidistantly across the circumference of the receiving element (14), and/or
wherein the width of the intermediate spaces corresponds at least to the width of the inner diameter of the receiving grooves (30).

6. A washing, care and/or drying roller (2) according to any of the preceding claims,
further comprising at least one washing, care and/or drying element (16) inserted into a receiving groove (30);
wherein the washing, care and/or drying element (16) is inserted into the receiving groove (30) in particular with a bead-like anchoring portion (40) of the same, and/or
wherein the bead-like anchoring portion (40) is widened (45) at one end to form a stop with respect to the end the receiving groove (30); and/or
wherein the washing, care and/or drying element (16) has a snap-in recess or a snap-in projection (44) and by means of the same is releasably latched with respect to a corresponding snap-in projection of the receiving groove (30) or with respect to a corresponding snap-in recess (42) of the receiving groove (30); and/or
wherein the washing, care and/or drying element (16), at its end near the roller, has an anchoring piece (38), in particular made of a plastic material, with a bead-like anchoring portion (40), and/or
wherein the outer diameter of the bead-like anchoring portion (40) corresponds to the inner diameter of the receiving groove (30) or is slightly smaller than the same, and/or
wherein the anchoring piece (38) is sewn to the end of the substantially strip-shaped textile piece near the roller, in particular is inserted into a receiving slot between two end tabs of the textile piece and is sewn to the two end tabs.

7. A washing, care and/or drying roller (2) according to any of the preceding claims,
further comprising at least one, preferably two adapter rings (12) per receiving element (14), which connect the respective receiving element (14) to the roller body (6) in non-rotatable manner.

8. A washing, care and/or drying roller (2) according to claim 7,
wherein the roller body (6) has axially extending longitudinal slots (18) on its outside,
wherein the at least one adapter ring (12) has roller body holding projections (22) formed on its inside and protruding inwards, which engage in the longitudinal slots (18) of the roller body (6); and/or
wherein the at least one adapter ring (12) abuts with its inside located between the roller body holding projections (22) on the outside of the roller body (6).

9. A washing, care and/or drying roller (2) according to claim 7 or 8,
wherein the at least one receiving element (14), at its upper and/or lower inside end, forms a substantially annular adapter ring holding portion (34) with adapter ring holding indentations (36); and/or
wherein the lower adapter ring holding portion (34) forms an upper, substantially radially directed and/or substantially annular adapter ring abutment surface, on which abuts in particular an adapter ring (12) with its upper side; and/or
wherein the upper adapter ring holding portion (34) forms a lower, substantially radially directed and/or substantially circular adapter ring abutment surface, on which abuts in particular an adapter ring (12) with its lower side.

10. A washing, care and/or drying roller (2) according to any of Claims 7 to 9,
wherein the at least one adapter ring (12) has outwardly projecting receiving element holding projections (26) which are formed on the outside thereof and which engage into the adapter ring holding indentations (36) of the receiving element (14); and/or
wherein the shape of the receiving element holding projections (26) corresponds to the shape of the adapter ring holding indentations (36); and/or
wherein the at least one adapter ring (12) abuts with its outside located between the receiving element holding projections (26) on the inside of the annular adapter ring holding portion (34) of the receiving element (14); and/or
wherein the at least one receiving element (14) has at least twice as many adapter ring holding indentations (36) on its upper and lower ring-like adapter ring holding portions (34) as the at least one adapter ring (12) has receiving element holding projections (26) so that two adjacent receiving elements (14), by means of their at least one adapter ring (12), can be positioned with respect to the roller body (6) such that their receiving grooves (30) are offset from one another in the direction of rotation so that the receiving grooves (30) of one receiving element (14) are aligned in the axial direction with intermediate spaces (32) of the respective adjacent receiving element (14); and/or
wherein the roller body (6) has at least twice as many longitudinal slots (18) as the at least one adapter ring (12) has roller body holding projections (22) on its inside, so that two adjacent receiving elements (14), by means of their at least one adapter ring (12), can be positioned with respect to the roller body (6) such that their receiving grooves (30) are offset from one another in the direction of rotation so that the receiving grooves (30) of one receiving element (14) are aligned in the axial direction with intermediate spaces (32) of the respective adjacent receiving element (14).

## Revendications

1. Rouleau de lavage, d'entretien et/ou de séchage (2), en particulier pour les installations de lavage de véhicules, présentant :
un corps de rouleau pouvant être entraîné en rotation (6) ; et
au moins deux éléments récepteurs (14) disposés l'un au-dessus de l'autre dans une direction axiale, reliés de façon solidaire en rotation avec le corps de rouleau (6) et de forme sensiblement cylindrique,
**caractérisé en ce que** les éléments récepteurs (14) présentent sur leur face extérieure des rainures de logement (30) s'étendant en direction axiale pour des éléments de lavage, d'entretien et/ou de séchage (16) ainsi que des espaces intermédiaires (32) situés entre des rainures de logement (30) voisines ;
et **en ce que** deux éléments récepteurs (14) voisins sont respectivement décalés l'un par rapport à l'autre dans le sens de rotation de telle sorte que les rainures de logement (30) d'un élément récepteur (14) sont alignées respectivement en direction axiale avec les espaces intermédiaires (32) de l'élément récepteur (14) voisin, afin de permettre un remplacement des éléments de lavage, d'entretien et/ou de séchage (16) sans démontage.

2. Rouleau de lavage, d'entretien et/ou de séchage (2) selon la revendication 1,
dans lequel les rainures de logement (30), vues en section transversale, présentent un profil en forme de C, et/ou
dans lequel les rainures de logement (30) s'étendent au moins sur une grande partie de la hauteur de l'élément récepteur (14) correspondant.

3. Rouleau de lavage, d'entretien et/ou de séchage (2) selon la revendication 1 ou 2,
dans lequel les rainures de logement (30) sont ouvertes à leurs extrémités supérieure et inférieure, et/ou
dans lequel les rainures de logement (30) présentent une gorge d'encliquetage (42) pour encliqueter de façon amovible en hauteur un élément de lavage, d'entretien et/ou de séchage (16) au moyen d'une saillie d'encliquetage (44) correspondante réalisée sur l'élément de lavage, d'entretien et/ou de séchage (16) ; et/ou
dans lequel les rainures de logement (30) présentent une saillie d'encliquetage pour encliqueter de façon amovible en hauteur un élément de lavage, d'entretien et/ou de séchage (16) au moyen d'une gorge d'encliquetage correspondante réalisée sur l'élément de lavage, d'entretien et/ou de séchage (16).

4. Rouleau de lavage, d'entretien et/ou de séchage (2) selon la revendication 1 ou 2,
dans lequel les rainures de logement (30) sont ouvertes à leur extrémité supérieure, et/ou
dans lequel les rainures de logement (30) présentent à leur extrémité inférieure une butée, pour le positionnement en hauteur et/ou pour empêcher un glissement de l'élément de lavage, d'entretien et/ou de séchage (16) concerné.

5. Rouleau de lavage, d'entretien et/ou de séchage (2) selon l'une quelconque des revendications précédentes,
dans lequel les éléments récepteurs (14) sont réalisés d'une seule pièce avec les rainures de logement (30), ou
dans lequel les éléments récepteurs (14) sont assemblés avec les rainures de logement (30) à partir de deux éléments récepteurs partiels de forme sensiblement semi-cylindrique avec des rainures de logement (30) ; et/ou
dans lequel les rainures de logement (30) sont réparties à distance égale sur la circonférence de l'élément récepteur (14), et/ou
dans lequel la largeur des espaces intermédiaires correspond au moins à la largeur du diamètre intérieur des rainures de logement (30).

6. Rouleau de lavage, d'entretien et/ou de séchage (2) selon l'une quelconque des revendications précédentes,
présentant en outre au moins un élément de lavage, d'entretien et/ou de séchage (16) inséré dans une rainure de logement (30) ;
dans lequel l'élément de lavage, d'entretien et/ou de séchage (16) est en particulier inséré dans la rainure de logement (30) avec une zone d'ancrage en forme de bourrelet (40), et/ou
dans lequel la zone d'ancrage en forme de bourrelet (40) est élargie à une extrémité (45) afin de former une butée face à l'extrémité de la rainure de logement (30) ; et/ou
dans lequel l'élément de lavage, d'entretien et/ou de séchage (16) présente une gorge d'encliquetage ou une saillie d'encliquetage (44) et est encliqueté de façon amovible au moyen de cette gorge ou de cette saillie face à une saillie d'encliquetage correspondante de la rainure de logement (30) ou face à une gorge d'encliquetage (42) correspondante de la rainure de logement (30) ; et/ou
dans lequel l'élément de lavage, d'entretien et/ou de séchage (16) présente à son extrémité proche du rouleau une pièce d'ancrage (38), en particulier en matière plastique, avec une zone d'ancrage en forme de bourrelet (40), et/ou
le diamètre extérieur de la zone d'ancrage en forme de bourrelet (40) correspond au diamètre intérieur de la rainure de logement (30) ou est légèrement inférieur à celui-ci, et/ou
la pièce d'ancrage (38) est cousue à l'extrémité proche du rouleau de la pièce en tissu sensiblement en forme de bande, en particulier qu'elle est insérée dans une fente de logement entre deux pattes d'extrémité de la pièce textile et cousue avec ces deux pattes d'extrémité.

7. Rouleau de lavage, d'entretien et/ou de séchage (2) selon l'une quelconque des revendications précédentes,
présentant en outre au moins une, de préférence deux bagues d'adaptation (12) par élément récepteur (14), qui relient de façon solidaire l'élément récepteur (14) au corps de rouleau (6).

8. Rouleau de lavage, d'entretien et/ou de séchage (2) selon la revendication 7,
dans lequel le corps de rouleau (6) présente des fentes longitudinales (18) sur sa face extérieure en direction axiale,
dans lequel la bague d'adaptation (12), une au moins, présente des saillies de maintien du corps de rouleau (22) formées sur sa face intérieure, qui s'engagent dans les fentes longitudinales (18) du corps de rouleau (6) ; et/ou
dans lequel la bague d'adaptation (12), une au moins, repose avec sa face intérieure située entre les saillies de maintien du corps de rouleau (22) contre la face extérieure du corps de rouleau (6).

9. Rouleau de lavage, d'entretien et/ou de séchage (2) selon la revendication 7 ou 8,
dans lequel l'élément récepteur (14), un au moins, forme à l'extrémité supérieure et/ou à l'extrémité inférieure de sa face intérieure une zone de maintien de bague d'adaptation (34) de forme sensiblement annulaire avec des renfoncements de maintien de bague d'adaptation (36) ; et/ou
dans lequel la zone de maintien de bague d'adaptation (34) inférieure forme une surface d'appui supérieure orientée de manière sensiblement radiale et/ou de forme sensiblement annulaire, contre laquelle vient s'appuyer en particulier une bague d'adaptation (12) avec sa face supérieure ; et/ou
dans lequel la zone de maintien de bague d'adaptation (34) supérieure forme une surface d'appui inférieure orientée de manière sensiblement radiale et/ou de forme sensiblement annulaire, sur laquelle repose en particulier une bague d'adaptation (12) avec sa face inférieure.

10. Rouleau de lavage, d'entretien et/ou de séchage (2) selon l'une quelconque des revendications 7 à 9,
dans lequel la bague d'adaptation (12), une au moins, présente des saillies de maintien d'élément récepteur (26) formées sur sa face extérieure et dépassant vers l'extérieur, qui s'engagent dans les renfoncements de maintien de bague d'adaptation (36) de l'élément récepteur (14) ; et/ou
dans lequel la forme des saillies de maintien d'élément récepteur (26) correspond à la forme des renfoncements de maintien de bague d'adaptation (36) ; et/ou
dans lequel la bague d'adaptation (12), une au moins, repose avec sa face extérieure située entre les saillies de maintien d'élément récepteur (26) contre la face intérieure de la zone de maintien de bague d'adaptation (34) de forme annulaire de l'élément récepteur (14) ; et/ou
dans lequel l'élément récepteur (14), un au moins, présente au moins deux fois plus de renfoncements de maintien de bague d'adaptation (36) dans sa zone de maintien de bague d'adaptation (34) supérieure et inférieure de forme annulaire, que la bague d'adaptation (12), une au moins, comporte de saillies de maintien d'élément récepteur (26), afin que deux éléments récepteurs voisins (14) puissent être positionnés par rapport au corps de rouleau (6) au moyen de leur bague d'adaptation (12), une au moins, de telle sorte que leurs rainures de logement (30) soient décalées l'une par rapport à l'autre dans le sens de rotation de telle sorte que les rainures de logement (30) d'un élément récepteur (14) soient alignées respectivement en direction axiale avec les espaces intermédiaires (32) de l'élément récepteur (14) voisin ; et/ou
dans lequel le corps de rouleau (6) présente au moins deux fois plus de fentes longitudinales (18) que la bague d'adaptation (12), une au moins, comporte de saillies de maintien du corps de rouleau (22) sur sa face intérieure, afin que deux éléments récepteurs voisins (14) puissent être positionnés par rapport au corps de rouleau (6) au moyen de leur bague d'adaptation (12), une au moins, de telle sorte que leurs rainures de logement (30) soient décalées l'une par rapport à l'autre dans le sens de rotation, de telle sorte que les rainures de logement (30) d'un élément récepteur (14) soient alignées respectivement en direction axiale avec des espaces intermédiaires (32) de l'élément récepteur (14) voisin.
